# EUROPEAN PATENT APPLICATION

(11) **EP 1 655 350 A1**
(43) Date of publication of application: **10.05.2006**
(21) Application number: 04026505.0
(22) Date of filing: 09.11.2004
(51) Int. Cl.: C09D 5/44, C09D 163/02, C08G 18/64, C09D 133/08

(54) **Aqueous paint composition and process to reduce or suppress surface defects in paint films**

(71) Applicant: Cytec Surface Specialties Austria GmbH, 8402 Werndorf (AT)
(72) Inventor: Hobisch, Gerald Dr., 8042 Graz (AT); Morre, Peter, 8020 Graz (AT)
(74) Representative: Deckers, Hellmuth Alexander

(57) **Abstract**

A process to reduce or suppress the formation of surface defects in paint films comprising adding to an aqueous paint composition at least one of homopolymers **B** of butyl acrylate and copolymers **BA** of butyl acrylate and copolymerisable monomers **A**, characterised in that the mass fraction of moieties arising from the comonomers **A** in the copolymer does not exceed 30 %, and aqueous paint compositions comprising at least one of homopolymers **B** of butyl acrylate and copolymers **BA** of butyl acrylate and copolymerisable monomers **A**

## Description

The invention relates to a process to reduce or suppress surface defects in paint films.

In aqueous CED (cathodic electrodeposition coating) baths especially in the OEM coating of metal surfaces such as car bodies, additives are needed to reduce or suppress surface defects in the paint film such as pinholes and craters caused by the contamination of the metal sheets and and the bath liquid itself, due to the drawing grease and oils of the forming process. A further requirement is that the adhesion of polyvinyl chloride based sealing materials on the paint film shall not be impaired by the additive.

In the experiments underlying the present invention, it has surprisingly been discovered that butyl acrylate copolymers, wherein the mass fraction of moieties in the polymer originated by the comonomers does not exceed 30 %, can be used as additives in CED baths and impart the desired properties to the said CED baths.

The subject of the present invention is therefore a process to reduce or suppress the formation of surface defects in paint films comprising adding to an aqueous paint composition homopolymers B of butyl acrylate or copolymers **BA** of butyl acrylate and copolymerisable monomers **A,** characterised in that the mass fraction of moieties arising from the comonomers **A** in the copolymer **BA** does not exceed 30 %. Moieties are said to be arising from a comonomer if such a moiety is formed by replacing the carbon-carbon double bond of the monomer by a single bond to form a diradical structure, such structures being attached to each other to form the polymer. Preferred comonomers A are alkyl (meth)acrylates **A1** other than butyl acrylate having from 1 to 18, preferably from 2 to 8 carbon atoms in the alkyl group, where the alkyl group may be linear, branched, or cyclic, and hydroxyalkyl (meth)acrylates A2 having from 2 to 6, preferably from 2 to 4 carbon atoms in the hydroxyalkyl group. Especially preferred are homo- and copolymers having a Staudinger index **J**_{**g**} (measured in chloroform as solvent, at 23 °C) of from 3,5 cm³/g to 16,0 cm³/g. Preferably, the polymers according to the invention shall have a Staudinger index of from 4,5 cm³/g to 10,0 cm³/g.

The physical quantity formerly also referred to as "limiting viscosity", correctly named "Staudinger index" *J*_{*g*} in accordance with DIN 1342, part 2.4, is the limiting value of the Staudinger function *J*_{*v*} for concentration and shear gradient approaching zero, where *J*_{*v*} is the increase of the relative viscosity due to a solute divided by the mass concentration β_{B} *= **m** B* / *V* of the solute B (with the mass ***m***_{B} of the solute in a volume V of the solution), i. e.*J*ᵥ = (*n*_{*r*}*-*1)/*β*_{B} . ηᵣ - 1 stands for the increase in relative viscosity: ηᵣ - 1 = (η - ηₛ) / ηₛ], where the relative viscosity ηᵣ is the ratio of the viscosity η of the solution under examination and the viscosity ηₛ of the pure solvent. (The physical significance of the Staudinger index is that of a specific hydrodynamic volume of the solvated polymer coil at infinite dilution and in the state of rest.) The usual unit for *J* is "cm³/g"; formerly also often stated in units of "dl/g".

A further subject of the invention are aqueous paint compositions, especially those for use in cathodic electrodeposition ("CED"), which comprise at least one of the homopolymers B and the copolymers BA defined supra.

Still another subject of the invention is a process of coating substrates which are preferably electrically conductive by a coating composition which comprises at least one of the homopolymers B and the copolymers **BA** defined supra.

In a preferred embodiment, the mass fraction of moieties arising from comonomers other than butyl acrylate in the copolymer **BA** does nor exceed 25 %, more preferably, it does not exceed 20 %. In a further preferred embodiment, the mass fraction arising from moieties of hydroxyl group containing comonomers is not more than 5 %, more preferably, not more than 3 %.

The polymers which are essential to the process according to the invention can be made by radical polymerisation conducted in a solvent which is inert under the conditions of a radical polymerisation. The solvent may be removed by distillation before admixing the said polymers as additives to a CED bath. Should the solvent not be removed, it is advantageous to use a water miscible solvent. Solvents are considered water miscible in the context of the present invention if they form single phase mixtures with water at room temperature (20 °C) over at least a range of mass fractions of solvent in the mixture of from 20 % to 80 %.

The homopolymers B and copolymers BA used in the present invention by themselves are not soluble nor emulsifiable in, nor miscible with, water. In other words, they do not form single phase mixtures with water, nor do they form stable dispersions which do not settle for at least 24 hours. Therefore, they are usually incorporated into the aqueous paints, preferably the CED baths, by addition to the binder before the binder itself is diluted with water. The mass fraction of these additives according to the invention is preferably from 0.5 % to 5 %, especially preferred from 0.9 % to 1.8 %, based on the mass of solids in the aqueous paint, preferably the CED bath liquid. "Solids" shall mean the solid resin portion within the aqueous paint, not including other components such as catalyst residues, pigments, levelling additives, and fillers. This solid resin portion is also referred to as "resinous part" in the context of the present invention.

It has been found that the presence in aqueous paints, especially in CED baths, of these additives according to the invention markedly reduces the propensity to form surface defects on substrates coated with such paints, especially by electrodeposition in these baths.

Those resins to be cathodically deposited on a conductive substrate which form the major ingredient in the CED baths are preferably the well-known epoxy amine adducts. They are preferably based on epoxide resins of the bisphenol A type, and aliphatic amines which have the amino groups connected to an aliphatic carbon atom. In a preferred manner, they are cured with capped isocyanate type curing agents. Upon stoving, or heating the coated substrates, the capping agent is split off, and the isocyanate group is regenerated if the stoving temperature is above the decapping temperature of the capped isocyanate. The regenerated isocyanate group can then reactwith hydroxyl or amino groups in the epoxy amine adduct, thereby crosslinking the coating film. Epoxy amine adducts may be prepared as known in the art by reaction of polyfunctional epoxides having at least two epoxide groups per molecule, and primary or secondary amines, or mixtures of these, or salts thereof.

### Examples

The invention is further illustrated by the following examples. In these examples, the acid number is defined according to DIN EN ISO 3682 (DIN 53 402) as the ratio of the mass ***m***_{KOH} of potassium hydroxide which is needed to neutralise the sample in question, and the mass ***m***_{B} of the sample (or mass of solids in the sample in the case of solutions or dispersions); the customary unit is "mg/g". The specific epoxide group content *"SEC'* is defined as the ratio of the amount of substance of epoxide groups *n*(EP) and the mass ***m***_{B} of the substance (and is therefore the reciprocal of the so-called "epoxide value" or "epoxide equivalent weight"); the SI unit is "mol/kg".

Concentration, or strength, measured in "%", is always the mass fraction *w*_{*B*} of a solute B in the solution (or dispersed component in a dispersion), calculated as ***w***_{*B*} = ***m***_{B} / ***m*,** where ***m***_{B} is the mass of the solute, and m is the mass of the solution.

### Example 1 Synthesis of binder A

In a vessel equipped with a stirrer, a thermometer, a dropping funnel, and a reflux condenser, 1000 g of an epoxy resin based on bisphenol A with a specific epoxide group content of 2 mol/kgwere dissolved in 500 g of methyl isobutyl ketone at from 70 °C to 90 °C. 0.2 g of hydroquinone and 168 g of methacrylic acid were added. Temperature was raised to 110 °C, and the reaction was continued until the acid number had dropped to less than 3 mg/g. After cooling to 60 °C, 650 g of a monoisocyanate-solution made from 0.9 mol of N,N-dimethyl ethanolamine per 1 mol of toluylene diisocyanate in a 70 % strength solution in methyl isobutyl ketone were added, and the mixture was reacted until no free isocyanate groups could be detected any more.

### Example 2 Synthesis of binder B

In a vessel equipped with a stirrer, a thermometer, a dropping funnel, and a reflux condenser, 400 g of an epoxy resin based on bisphenol A with a specific epoxide group content of 5 mol/kg were dissolved in 172 g of methyl isobutyl ketone at from 60 °C to 70 °C. 210 g (2 mol) of diethanolamine were added. When the evolution of heat had ceased, the reaction was continued for one more hour at 130 °C which was the reflux temperature. After cooling to 75 °C, 830 g of a monoisocyanate solution made from 1 mol of toluylene diisocyanate per 1 mol of hydroxyethyl methacrylate in a 70 % strength solution in methyl isobutyl ketone were added, and the mixture was reacted until no free isocyanate groups could be detected any more.

### Example 3 Synthesis of the additives according to the invention

Homopolymers and copolymers of butyl acrylate were prepared from mixtures of monomers according to table 1. Polymerisation was conducted in solution using isopropanol as solvent at reflux temperature (80 °C to 85 °C) feeding the monomers simultaneously with the radical initiator solution (azobisisobutyronitrile (AIBN), 5 % strength in isopropanol) over a period of 6 h. The mass of the initiator was 2 % of the mass of the monomers. The polymers formed were isolated from the solution by evaporation of the solvent under reduced pressure of 100 hPa (100 mbar) while increasing the temperature up to 120 °C.

**Table 1 Composition of the butyl acrylate (co)polymers B1 to B4 and comparative polymers V1 and V2 (mass fractions in %)**

| | EA | BA | BMA | 2-EHA | 2-HEA |
|---|---|---|---|---|---|
| B1 | 15 | 85 | - | - | - |
| B2 | - | 80 | 10 | 10 | - |
| B3 | - | 90 | - | 5 | 5 |
| B4 | - | 100 | - | - | - |
| V1 | - | - | - | 100 | - |
| V2 | 20 | 40 | - | 30 | 10 |

| | | | | | |
|---|---|---|---|---|---|
| EA = ethyl acrylate, BA = butyl acrylate, BMA = butyl methacrylate, | | | | | |
| 2-EHA = 2-ethylhexyl acrylate, 2-HEA = 2-hydroxyethyl acrylate | | | | | |

The sum of the mass fractions of monomers employed is always 100 %.

### Example 4 Preparation of a dispersion

Binders A and B from Examples 1 and 2 were mixed in a mass ratio of solids in these binders of 80 parts of A and 20 parts of B. To these mixtures, the polymers B1 to B4 and V1 and V2 of Example 3 were added to have a mass fraction of 0.85 % of the additive polymer, based on the resin solids of the mixtures of A and B. 30 mmol of formic acid were added to neutralise the binders. At 80 °C, the solvent, methyl isobutyl ketone was removed by distillation under reduced pressure (100 hPa = 100 mbar), and deionised water was then added under vigorous stirring to form a 45 % strength dispersion. Stirring was continued while cooling the dispersion to ambient temperature (20 °C), and more deionised water was added to form a 35 % strength dispersion. Binder dispersions 4.1 to 4.6 were obtained, based on the additions of polymers B1 to B4 and V1 and V2 to the mixture.

### Example 5 Preparation of CED paints

A pigment paste was prepared according to Examples 1 and 2 of EP 1 088 038 B1. 1600 g each of the binder dispersions 4.1 to 4.6 of Example 4 were mixed with 2870 g of deionised water, and 530 g of the said pigment paste. 5000 g each of paints 5.1 to 5.6 were obtained, having a mass fraction of solids of approximately 17 %, and a pH of 6.0.

### Example 6 Coating of steel sheets

Steel sheets that had been pretreated by phosphatisation were dipcoated using the paints 5.1 to 5.6 of Example 5 at 30 °C and 300 V for 2 minutes, to form a layer of approximately 25 µm dry film thickness. After a flush off of 10 minutes at 80 °C, the steel sheets were cured for 20 minutes at 180 °C.

Example 7 Testing of the Surfaces

### Surface Quality

was assessed by visual inspection:
OK smooth defect-free surface without any craters, pinholes, or other indentations
SOME up to five less pronounced craters, but no metal surface visible
BAD pronounced defects such as craters, pinholes, or other indentations

### oil drop test

The effect of the additives is assessed by the following test:
The coated steel sheets of Example 6 coated with paints 5.1 to 5.6 were air dried, a drop each of a forming oil (®Anticorit RP 41078) was deposited on the coated surface, and then the sheets were stoved for 15 minutes at 180 °C. The test result is "OK" if there is no marking to be seen on the paint film; "SINGLE" if there is a single defect, with no metal visible, and if there are multiple dents or craters in the paint film, or if the metal is visible, the result is "FAII,".

### PVC adhesion test

Four further sets of coated steel sheets of Example 6 coated with paints 5.1 to 5.6 were air dried and stoved at 160 °C and at 180 °C, respectively. PVC based sealing compositions ("PVC-N", obtained from Gurit-Essex AG, Switzerland) were applied to the coated and stoved sheets to give a layer thickness of 2 mm using a frame of 20 mm x 40 mm and cured at 140 °C, and 160 °C, respectively. Adhesion was tested after cooling in the following manner :
A 5 mm strip of one edge of the PVC layer was removed from the substrate using a knife. The loose part was lifted with two fingers and it was tried to tear off the whole layer. The following assessment was made for PVC adhesion:
- 0: no adhesion
- 1: bad adhesion
- 2: poor adhesion
- 3: sufficient adhesion
- 4: good adhesion
- 5: very good adhesion

The results are compiled in table 2.

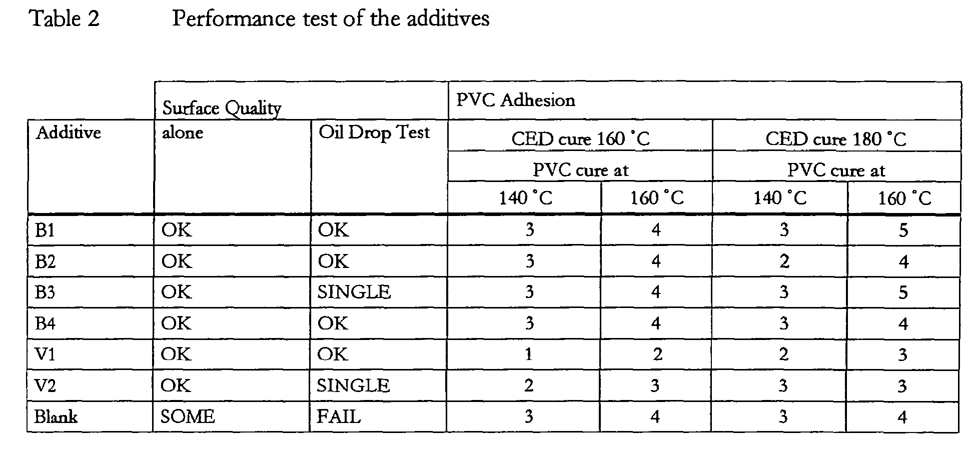

As can be seen, even with low temperature curing of the CED coat, excellent PVC adhesion is seen in the examples according to the invention. Less influence is seen if the CED is cured with high temperatures, and PVC is cured at low temperatures. As lowering of the curing temperatures of the coating is economically advantageous, the results for curing the CED coat at 160 °C are most important.

## Claims

1. A process to reduce or suppress the formation of surface defects in paint films comprising adding to an aqueous paint composition at least one of homopolymers B of butyl acrylate and copolymers **BA** of butyl acrylate and copolymerisable monomers **A, characterised in that** the mass fraction of moieties arising from the comonomers **A** in the copolymer does not exceed 30 %.

2. The process of claim 1 wherein the mass fraction of moieties arising from comonomers A having hydroxyl groups in the copolymer does not exceed 5 %.

3. The process of claim 1 where the aqueous paint composition comprises epoxy amine adducts.

4. The process of claim 1 where the mass fraction of homopolymers **B** or copolymers **BA,** based on the mass of the resinous portion, is from 0.5 % to 5 %.

5. The process of claim 1 wherein the aqueous paint composition is applied to an electrically conductive substrate by cathodic electrodeposition.

6. An aqueous paint composition comprising at least one of homopolymers B of butyl acrylate and copolymers **BA** of butyl acrylate and copolymerisable monomers **A, characterised in that** the mass fraction of moieties arising from the comonomers A in the copolymer does not exceed 30 %.

7. The aqueous paint composition of claim 6 wherein the mass fraction of moieties arising from comonomers **A** having hydroxyl groups in the copolymer does not exceed 5 %.

8. The aqueous paint composition of claim 6 wherein the mass fraction of the homopolymers B or of the copolymers BA based on the sum of the masses of the said polymers and the resinous portion of the aqueous paint is from 0.5 % to 5 %.

9. The aqueous paint composition of claim 6 wherein the paint composition comprises an epoxy amine adduct.

10. A substrate coated with the aqueous paint composition of claim 6.
